# EUROPEAN PATENT APPLICATION

(11) **EP 1 613 093 A2**
(43) Date of publication of application: **04.01.2006**
(21) Application number: 05254007.7
(22) Date of filing: 28.06.2005
(51) Int. Cl.: H04N 7/26, H04N 7/30

(54) **Area mapped compressed image bit budget monitor**

(30) Priority: 29.06.2004 US 882006
(71) Applicant: TEKTRONIX, INC., Beaverton, OR 97077 (US)
(72) Inventor: Zink, Scott E., Portland, Oregon 97229 (US); Ferguson, Kevin M., Beaverton, Oregon 97008 (US)
(74) Representative: Molyneaux, Martyn William

(57) **Abstract**

An area mapped compressed bit budget monitor receives a compressed video signal that represents frames of a video signal broken down into blocks of pixels with each block being represented by a bit sequence. The bits in each bit sequence are counted to produce bit counts that are translated into color and intensity values. The color and intensity values are used to present an area mapped display, with each block of a displayed frame being outlined according to the associated color and intensity value, or the outline being alternatively filled by the associated color and intensity value. The area mapped display may also include a cursor in the form of a filled block together with an associated coefficient array for the block indicated by the cursor.

## Description

### BACKGROUND OF THE INVENTION

The present invention relates to image compression, and more particularly to an area mapped compressed image bit budget monitor that may be used to artistically optimize an image for a given file size or transmission bit rate.

An image, such as a frame of a video signal, is compressed to either fit into a smaller file size or to reduce the bit rate during transmission of the video signal. With lossy compression there is a greater reduction in file size or bit rate, but there is also some degradation of image quality when decompressed. Modern video image compressors do a very good job, but there is always the need to shrink the file size or to send more video streams through the same bit rate pipe. This pushes the limits of the compressors. Artists generally have always had to deal with the limits of their media. For example, video has always had a limited dynamic range between the lightest and the darkest areas of a particular scene that can be depicted. A video artist, or videographer, uses a waveform monitor to help adjust the lighting on the scene to make the best use of that dynamic range. He might let some of the areas be overexposed or underexposed if they are not important to the scene, but the important parts are set to be within the limited dynamic range. The compression of a video signal gives a new set of limitations on the content to get it successfully into a certain file size or to achieve a desired transmission bit rate.

At the present time the tools for maximizing quality or minimizing bit rates are very limited. Quality maximization or bit rate reduction is usually done by experimentation. The videographer may use an MPEG analyzer to obtain requisite information by inspecting block information, but this is time consuming and therefore not suited for artistic work. Typically to get an uncompressed video file into a certain file size the videographer inputs the video signal to be compressed into a compressor, decompresses the output from the compressor and examines the output on an evaluation monitor display. An unsophisticated videographer may use just this output as is, even if the videographer is not satisfied with the outcome. A sophisticated videographer, if not satisfied, may use the knowledge of the video compression process to make a "guess" as to what is causing the problem and go back and make adjustments to the input video, and then rerun the test. The adjustment and test sequence is repeated until the videographer is satisfied. Since the adjustments are based on "guesses", the procedure is not very efficient and the results may be far from optimal.

What is desired is a system that enables a videographer to optimally maximize video picture quality while minimizing the bit rate or file size required.

### BRIEF SUMMARY OF THE INVENTION

Accordingly the present invention provides an area mapped compressed image bit budget monitor for a compressed video signal that represents frames of a video signal broken down into blocks of pixels with each block being represented by a bit sequence. The bits in each bit sequence are counted to produce bit counts that are translated into color and intensity values. The color and intensity values are used to present an area mapped display, with each block of a displayed frame being outlined according to the associated color and intensity value, or the outline being alternatively filled by the associated color and intensity value. The area mapped display may also include a cursor in the form of a filled or "flat" block together with an associated coefficient array for the block indicated by the cursor.

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is a block diagram view of a video compression quality chain with a bit budget monitor according to the present invention.
Fig. 2 is a pictorial view of an image as seen on an evaluation monitor display according to the prior art.
Fig. 3 is a pictorial view of the image of Fig. 2 as seen on a bit budget monitor display according to the present invention.
Fig. 4 is a block diagram view of a bit budget monitor according to the present invention.
Fig. 5 is a block diagram view of a video compressibility estimator using a bit budget monitor according to the present invention.
Fig. 6 is a pictorial view of (a) a scene as shown on an evaluation monitor display and (b) the same scene as shown with area mapping on a bit budget monitor display according to the present invention.
Fig. 7 is a pictorial view of the area mapped scene of Fig. 6 illustrating a cursor and related coefficient array display.
Fig. 8 is a pictorial view of the scene of Fig. 6 illustrating defining a region for spatial filter application according to the present invention.
Fig. 9 is a graphic view of a coefficient array that acts as a spatial filter according to the present invention.
Fig. 10 is a block diagram view of an alternative area mapped compressed image bit budget monitor according to the present invention for non-block coded compressors.

### DETAILED DESCRIPTION OF THE INVENTION

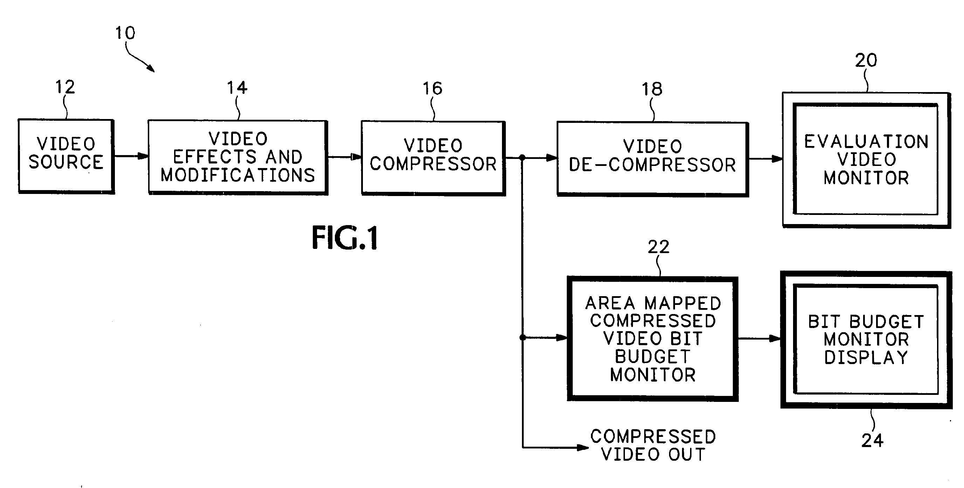

Referring now to Fig. 1 a video compression quality chain **10** is shown having a video source **12** containing video to be compressed. The video from the video source **12** is input to a video effects and modulation stage **14** where a videographer manipulates or adjusts the video to produce a desired output video. The desired output video is input to a standard video compressor **16** to provide a compressed video output. The compressed video output also is input to a standard video de-compressor **18** to recover a degraded version of the desired output video for display on an evaluation monitor display **20**. So far what has been described is a standard video compression quality chain where the videographer according to the prior art uses "guesses" in a repetitive adjustment and test sequence while observing the evaluation monitor display **20** until the video images are satisfactory. The present invention adds to the standard video compression video quality train an area mapped compressed image bit budget monitor **22** for processing the compressed video output, with the results being displayed on a bit budget monitor display **24**. The bit budget monitor **22** shows on the related monitor **24** the relative bit usage of various areas in the video image, thus giving the videographer insight into what areas of the video image are using up the bit budget in order to allow the videographer to make better "guesses" and use fewer iterations to approach an optimal solution faster.

To understand the present invention a brief overview of block encoding used in common forms of video compression is appropriate. In the video compressor **16** the video is broken down into frames or individual images, and the images are broken down into blocks of picture elements or pixels. These blocks of pixels are analyzed and a bit sequence is encoded for each block of pixels, typically using a discrete cosine transform (DCT) function with the resulting coefficients being quantized and processed by a variable length encoder (VLE). The bit sequence has a lot of information, such as motion vectors for moving picture images such as in the video signal, but the bit sequence is an encoding of the block of pixels. The bit budget monitor **22** counts the number of bits that encode each block of pixels and shows them to the videographer as an area mapped display on the bit budget monitor display **24.**

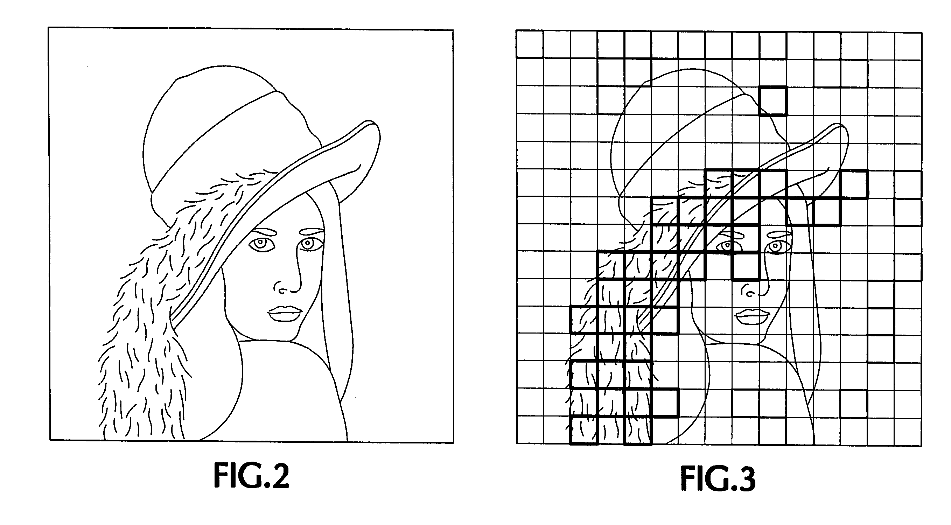

Fig. 2 shows a frame from the video as it appears on the evaluation monitor display **20**, and Fig. 3 shows the same frame as it appears on the bit budget monitor display **24**.

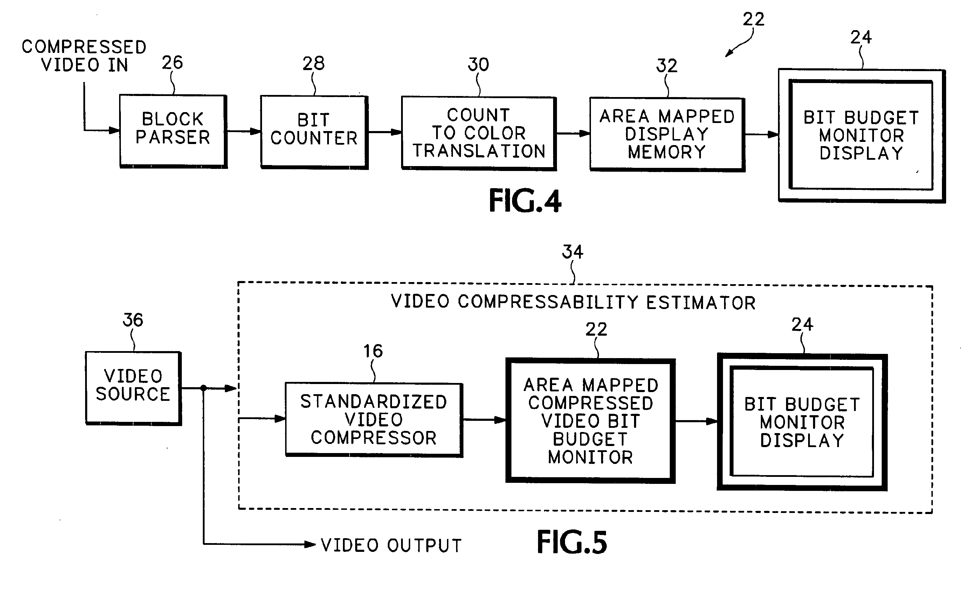

As shown in Fig. 4 the compressed video output is input to a block parser **26** for determining the bit sequences for each block of each frame in the compressed video output. Each bit sequence from the block parser **26** is input to a bit counter **28** where the number of bits for each block of pixels is counted. The bit count for each block from the bit counter **28** is input to a translator to map the bit count into an understandable form, such as a color and intensity. The colors and intensities are stored in an area mapped display memory **30** and then presented to the videographer in a corresponding area of the display **24** as the block of the frame from which it was derived. In Fig. 3 the number of bits encoding a particular block has been converted into a color and intensity that outlines that block. Each block is framed by its own color and intensity one pixel wide so shared boundaries show information from both adjacent blocks. The videographer then easily sees which areas of the picture are using the most bits. To point out the value of this information, note that in Fig. 3 the areas corresponding to the feather in the hat use far more bits, as shown by the red outlines, than the face which is probably more important artistically. Other forms than those depicted in Fig. 3 may be used, such as gray scales or displays where whole blocks are covered by the color and intensity. There is a key that informs the videographer how to interpret the color intensity information in terms of bit usage. One example for mapping the bit usage is:
Red = bit usage/3 with a limit at 255
Green = bit usage/2 with a limit at 128
Blue = bit usage/8 with a limit at 255
The key is a scale of bit usage from zero to max usage with the resultant colors, which may be displayed graphically, arranged top to bottom or side to side, on the display along with the corresponding number of bits. As an example, the key might go from black in steps of increasing green until bright green is reached with 256 bits, then go through yellow to red and then to purple. If the bit usage is zero, then the color is black since green is 0/2=0, red is 0/3=0 and blue is 0/8=0 so all components are zero. For a bit usage of 128 for a block or the key segment then green is 128/2=64, red is 128/3=42 and blue is 128/8=16 which gives a dark green. If the bit usage is 512, then green is 512/2 limit 128=128, red is 512/3=170 and blue is 512/8=64 which gives a red-orange.

Relative scales as well as absolute scales may be used. An absolute scale depiction for different file sizes by the same compressor **16**, resulting from different compressor settings or bit rates, indicates the actual bit usage for each setting and so is different for each setting. In distinction a relative scale depiction indicates the relative bit usage in various areas of the video frame or image, and shows whether or not it is changed by the different compressor settings. As an example the relative bit usage for an image may change little with different compressor settings, while the absolute bit usage changes a lot, indicating that the relative bit usage isn't being affected. In either case it is apparent that more bit usage is greater in one portion of the image than in another. The bit usage may or may not be what the videographer intends. The videographer for the image of Fig. 3 may desire more bits to go to the face as opposed to the feather since the face is artistically more important.

A video compressibility estimator **34** is shown in Fig. 5. The video from a video source, such as a camera **36**, is input to the standard video compressor **16** and the bit sequences for the blocks of pixels are input to the bit budget monitor **22** for presentation on the bit budget monitor display **24**. Such a video compressibility estimator **34** would normally be used where video is being made that is intended for subsequent compression and the videographer desires to make it as compressible as possible. In the case of Fig. 3 the videographer may ask the model to remove the feather. There is quite a bit of precedence for this sort of thing, as it has been quite common to ask people not to wear stripes or black and white checks when being shot for composite video since they cause cross-color effects.

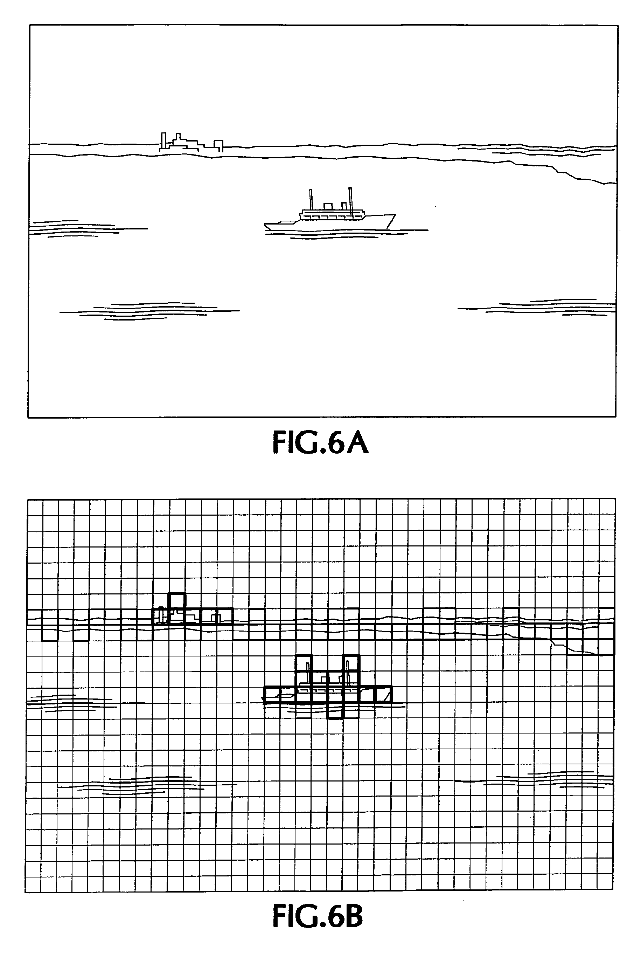

Referring now to Figs. 6A and 6B a picture of a ship is shown as it might appear on the evaluation monitor display **20** (Fig. 6A) and on the bit budget monitor display **24** (Fig. 6B) including a scale that correlates the block outline colors to a range of bits per block. Although one might guess that the sky has as many bits per block as the sea, in this scene it is actually the sea which uses far more bits per block as shown by the bright green outlines around the blocks in the sea area and the black outlines around blocks in the sky area. The videographer might feel that using so many bits on the sea is inappropriate and want to know if there is some way to decrease the bit usage for the sea. One might also guess that the sea is more colorful than the sky and therefore might want to use more bits. In this case the bit budget monitor **24** may be applied to just the luma component or just the chroma component. It quickly becomes apparent that most of the bits are used for luma and not for chroma, so the problem will not be solved by adjusting colors or chroma information.

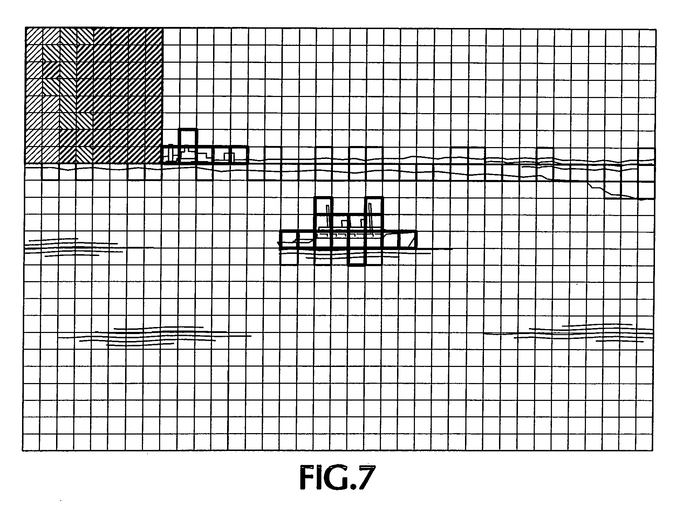

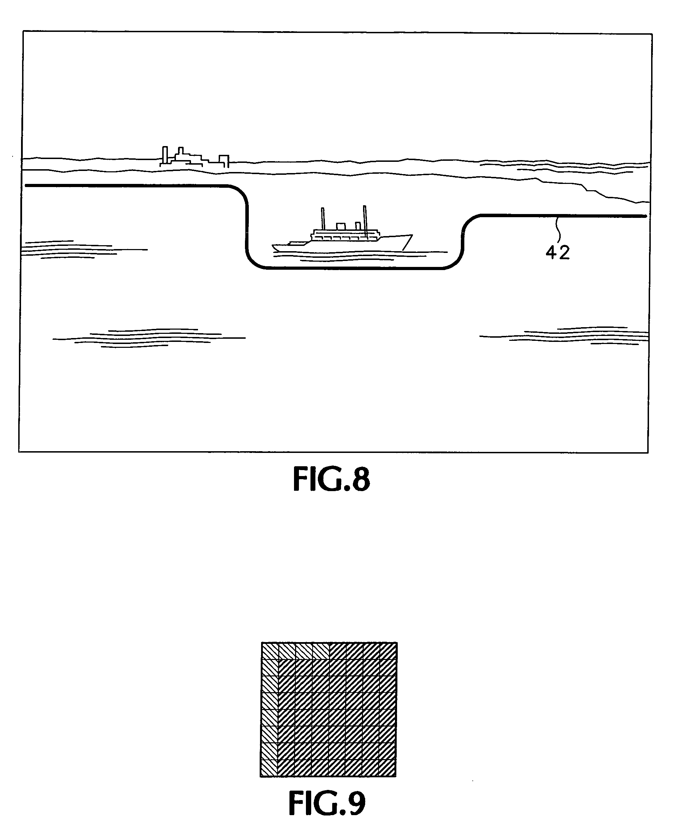

To bore further down the videographer may call up a cursor **38**, shown as a grey or "flat" block on the display, and a corresponding DCT coefficient array **40** for that block may be displayed, as shown in Fig. 7. By looking at the DCT coefficient array **40** for an area or block in the center of the sky, for an area in the center of the sea, for an area in the center of the shoreline and for an area of the shore with more details, the DCT coefficient usage for each area is discernible. The videographer may see that the sea is using more DCT coefficients than the sky, and so may decide to use a spatial filter on the sea to cut down its bit usage since it isn't that artistically important. Fig. 8 shows the same boat scene with a demarcation line **42** that divides the scene into a region for spatial filtering (most of the sea) and a region that is not spatial filtered.

The spatial filter may be implemented by zeroing out all coefficients, depicted as black in Fig. 9, except those in the first row and first column that are depicted as grey. This may not be optimum, but it serves for the present example because it is easy to see that this significantly decreases the information content from the sea when compared with the coefficient array **40** shown in Fig. 7. As a result the sea portion of the image may be degraded, but it is still artistically acceptable. In this particular example for a JPEG image file the original picture image may be reduced from 29K bytes to 19K bytes. If the same spatial filter is applied to the entire image, then there is severe degradation in artistic quality throughout the image, which is not acceptable. Thus the bit budget monitor enables the videographer to make the correct choices for spatial filtering.

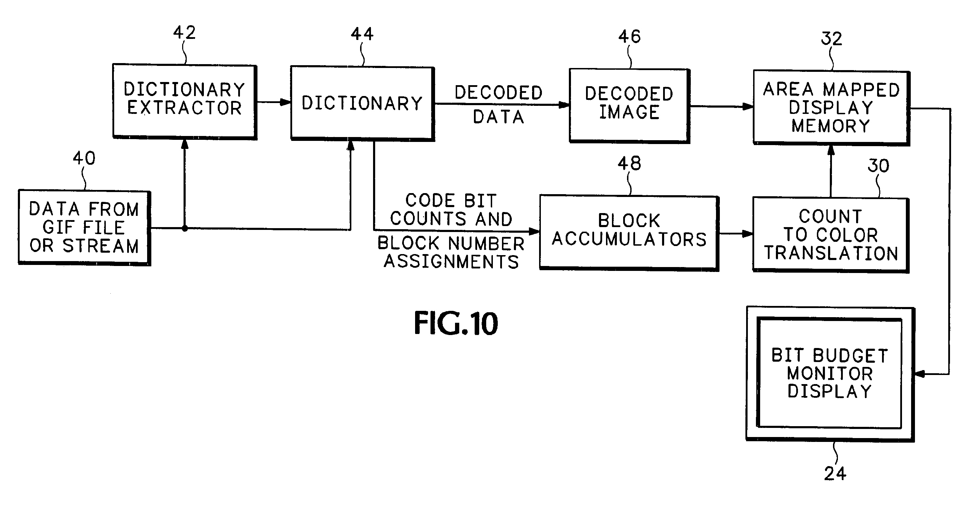

Although described above with respect to a block coded compressor, the present area mapped bit usage display may also be used with non-block coded compressors, such as wavelet compressors or zip compressors. As an example with reference to Fig. 10 in the .GIF image file format the compression scheme is one called LZW, which is a dictionary based compression scheme. An image file to be compressed is scanned and a dictionary is generated where codes represent strings in the input file that are repeated elsewhere in the file. The compressed data stream consists entirely of codes that identify the strings. If the codes plus the dictionary are smaller than the original file, then the file has been compressed. To generate a bit usage per block for such an image the compressed .GIF file **40** is input to a dictionary extractor **42** and a dictionary **44**. Output from the dictionary **44** are decoded data that produces a decoded image **46** and code bit counts and block assignments, where the image space is divided up into blocks. Each block is assigned a separate block accumulator **48**. This is more arbitrary that in the block coded compression schemes, but a suitable block size may be selected. As the compressed bit stream **40** is read and decompressed, i.e., the codes are read and looked up in the dictionary **44**, the number of bits used in each code read is added to the accumulator **48** for the block where the data being decoded will go. When the image decoding process is complete, the accumulated block counts are sent to the count to color translator **30**, and then to the area mapped display memory **32** together with the decoded image **46**. The result is displayed on the bit budget monitor display **24**.

Thus the present invention provides an array mapped compressed image bit budget monitor that counts the bits of each bit sequence of a compressed image representing a block of pixels from an image, and presents the resulting bit usage information on a suitable display using color and intensity values or grey scale values for each block in the image.

## Claims

1. An apparatus for monitoring a bit budget of a compressed image signal comprising:
means for parsing the compressed image signal into images and blocks of pixels within each image, each block of pixels being represented by a bit sequence;
means for counting the bits in each bit sequence to provide corresponding bit counts;
means for translating the bit counts into color and intensity values representative of the bit counts; and
means for presenting the color and intensity values as an area mapped display.

2. The apparatus as recited in claim 1 wherein the area mapped display comprises an outline for each block of a displayed image, the outline being presented with the color and intensity value corresponding to the block.

3. The apparatus as recited in claim 1 wherein the area mapped display comprises a plurality of filled outlines for each block of a displayed image, the filled outline being presented as a fill having the color and intensity value corresponding to the block.

4. The apparatus as recited in claims 2 or 3 wherein the area mapped display comprise:
a cursor block indicating a selected one of the blocks; and
a coefficient graphic indicating the bit distribution for the bit sequence corresponding to the selected block.

5. The apparatus as recited in claim 1 further comprising:
means for compressing a video signal to produce the compressed image signal;
means for decompressing the compressed video signal to produce a decompressed video signal; and
means for displaying the decompressed video signal;
whereby a video compression quality train is formed for the compressed video signal.

6. The apparatus as recited in claim 1 further comprising means for compressing a video signal to produce the compressed image signal; whereby a video compressibility estimator is formed for the video signal.
